# EUROPEAN PATENT APPLICATION

(11) **EP 4 681 817 A1**
(43) Date of publication of application: **21.01.2026**
(21) Application number: 24770282.2
(22) Date of filing: 05.02.2024
(51) Int. Cl.: B01J 35/57, B01D 53/94, B01J 29/74, F01N 3/10

(54) **EXHAUST GAS PURIFICATION CATALYST DEVICE AND EXHAUST GAS PURIFICATION CATALYST SYSTEM**

(30) Priority: 14.03.2023 JP 2023039726
(71) Applicant: CATALER CORPORATION, Kakegawa-shi, Shizuoka 437-1492 (JP)
(72) Inventor: TAKASU, Ryosuke, Kakegawa-shi, Shizuoka 437-1492 (JP); SUGAWARA, Ko, Kakegawa-shi, Shizuoka 437-1492 (JP); SHIRAYAMA, Yodai, Kakegawa-shi, Shizuoka 437-1492 (JP); ITO, Masaya, Kakegawa-shi, Shizuoka 437-1492 (JP); YAMAZAKI, Yuya, Kakegawa-shi, Shizuoka 437-1492 (JP)
(74) Representative: Ricker, Mathias
(86) International application number: PCT/JP2024/003733
(87) International publication number: WO 2024/190162

(57) **Abstract**

Provided is an exhaust gas purification catalyst device for a gasoline engine, the exhaust gas purification catalyst device comprising: a base material; an NH₃ adsorption layer containing proton-type zeolite; and a PGM layer containing a catalyst noble metal selected from Pd, Pt, and Rh. The proton-type zeolite included in the NH₃ adsorption layer has an average pore size of 0.60 nm or less. The NH₃ adsorption layer is arranged on the base material side relative to the PGM layer, and is arranged with a length shorter than the total length of the base material from the exhaust gas flow upstream end of the base material. The PGM layer is arranged with a length longer than the NH₃ adsorption layer from the exhaust gas flow upstream end of the base material.

## Description

### FIELD

The present invention relates to an exhaust gas purification catalytic device for a gasoline engine, which is used in an exhaust gas system of a gasoline engine.

### BACKGROUND

In exhaust gases discharged from gasoline engines, HC (hydrocarbons), CO (carbon monoxide), and NOx (nitrogen oxides) are contained. These are purified by exhaust gas purification catalytic devices or systems disposed in exhaust gas systems of engines, and are then discharged into the atmosphere.

As an exhaust gas purification system, there is known a system in which a plurality of exhaust gas purification catalytic devices are arranged in series along the exhaust gas flow direction of an exhaust gas system. For example, PTL 1 discloses an exhaust gas purification system comprising an upstream side three-way catalytic device supporting Pt or Rh; and a downstream side three-way catalytic device supporting Pd and an HC adsorbent.

In an exhaust gas purification system comprising an upstream side three-way catalytic device and a downstream side three-way catalytic device, a steam reforming reaction of NOx in exhaust gas occurs in the upstream side three-way catalytic device, generating NO₂ and H₂. When the exhaust gas is in a rich atmosphere, the NOx in the exhaust gas may be reduced by the generated H₂ to generate NH₃. The NH₃ generated in the upstream side three-way catalytic device may be reoxidized in the downstream side three-way catalytic device to regenerate NOx, causing a problem from the viewpoint of NOx purification.

For example, PTL 2 describes a system comprising a first purification unit that oxidizes a component in an exhaust gas; and a second purification unit that has an ammonia storage capacity and has a function of reducing and purifying the component oxidized in the first purification unit by the stored ammonia, wherein an upstream side catalytic device comprising the first purification unit is disposed on an upstream side of an exhaust gas flow, and a bilayer-type downstream side catalytic device, in which an upper layer consisting of the second purification unit is layered on a lower layer consisting of the first purification unit, is disposed on a downstream side.

PTL 2 describes that when NH₃ is generated in the upstream side catalytic device, the second purification unit in the downstream side catalytic device stores the NH₃, and inflowing NOx is reduced to N₂ and purified by the stored NH₃. PTL 2 describes that Cu-zeolite is used in the second purification unit having NH₃ storage capacity.

### [CITATION LIST]

### [PATENT LITERATURE]

[PTL 1] Japanese Unexamined Patent Publication (Kokai) No. 2002-263450
[PTL 2] Japanese Unexamined Patent Publication (Kokai) No. 2018-100619

### SUMMARY

### [TECHNICAL PROBLEM]

Automotive exhaust gas regulations have been tightening year after year. In the recently announced Euro 7 standards, NH₃ has been added to regulation targets in addition to the conventional HC, CO, and NOx. Accordingly, there has arisen a need for an exhaust gas purification catalytic device or system in which the amount of NH₃ discharged is lowered while maintaining conventional three-way catalytic performance.

The present invention has been made in view of the above circumstances, and an object thereof is to provide an exhaust gas purification catalytic device for a gasoline engine in which, when used in an exhaust gas system of a gasoline engine, heat resistance is high, high-level three-way catalytic performance is exhibited, and the amount of NH₃ discharged is lowered; and an exhaust gas purification catalytic system comprising the exhaust gas purification catalytic device.

### [SOLUTION TO PROBLEM]

The present invention is as follows.

<<Aspect 1>> An exhaust gas purification catalytic device for a gasoline engine, comprising
   a substrate,
   a NH₃ adsorption layer containing a proton-type zeolite, and
   a PGM layer containing a catalytic noble metal selected from Pd, Pt, and Rh, wherein
   the proton-type zeolite contained in the NH₃ adsorption layer has an average pore size of 0.60 nm or less,
   the NH₃ adsorption layer
      is disposed on the substrate side relative to the PGM layer, and
      is disposed with a length shorter than total length of the substrate from an exhaust gas flow upstream end of the substrate, and
   the PGM layer is disposed with a length longer than the NH₃ adsorption layer from the exhaust gas flow upstream end of the substrate.
<<Aspect 2>> The exhaust gas purification catalytic device according to Aspect 1, wherein the proton-type zeolite comprises 80% by mass or more of a small-ring proton-type zeolite in which a basic framework consists only of a ring selected from 4-, 6-, and 8-membered rings relative to total mass of the proton-type zeolite.
<<Aspect 3>> The exhaust gas purification catalytic device according to Aspect 2, wherein the small-ring proton-type zeolite is one or more selected from H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG, and H-ZON.
<<Aspect 4>> The exhaust gas purification catalytic device according to Aspect 1, wherein the NH₃ adsorption layer is disposed with a length of 40% or more and 90% or less of substrate total length from the upstream end of the substrate.
<<Aspect 5>> The exhaust gas purification catalytic device according to Aspect 2, wherein the NH₃ adsorption layer is disposed with a length of 40% or more and 90% or less of substrate total length from the upstream end of the substrate.
<<Aspect 6>> The exhaust gas purification catalytic device according to any one of Aspects 1 to 5, wherein
   the PGM layer has a first PGM layer containing a catalytic noble metal selected from Pd and Pt; and a second PGM layer containing Rh,
   the first PGM layer forms an uppermost layer in which a length of 10% or more of substrate total length from the exhaust gas flow upstream end of the substrate is in direct contact with an exhaust gas, and
   the second PGM layer forms an uppermost layer in which a length of 20% or more of substrate total length from an exhaust gas flow downstream end of the substrate is in direct contact with the exhaust gas.
<<Aspect 7>> The exhaust gas purification catalytic device according to Aspect 6, wherein the first PGM layer is disposed with a length of 10% or more and 80% or less of substrate total length from the exhaust gas upstream end of the substrate.
<<Aspect 8>> The exhaust gas purification catalytic device according to Aspect 6, wherein the second PGM layer is disposed with a length of 20% or more and 90% or less of substrate total length from the exhaust gas downstream end of the substrate.
<<Aspect 9>> The exhaust gas purification catalytic device according to Aspect 6, wherein
   the first PGM layer is disposed with a length of 20% or more and 80% or less of substrate total length from the exhaust gas upstream end of the substrate,
   the second PGM layer is disposed with a length of 30% or more and 90% or less of substrate total length from the exhaust gas downstream end of the substrate,
   a total of a length of the first PGM layer and a length of the second PGM layer exceeds total length of the substrate, and
   in a region where the first PGM layer and the second PGM layer overlap, the second PGM layer forms an uppermost layer in direct contact with the exhaust gas.
<<Aspect 10>> An exhaust gas purification method, comprising disposing the exhaust gas purification catalytic device according to any one of Aspects 1 to 5 in an exhaust gas system of a gasoline engine to purify an exhaust gas discharged from the gasoline engine.
<<Aspect 11>> An exhaust gas purification catalytic system for a gasoline engine, comprising
   an upstream side purification catalytic device disposed on an exhaust gas flow upstream side of an exhaust gas system of a gasoline engine, and
   a downstream side purification catalytic device disposed on an exhaust gas flow downstream side of the exhaust gas system, wherein
   the upstream side purification catalytic device is a three-way exhaust gas purification catalytic device comprising a platinum group catalytic noble metal, and
   the downstream side purification catalytic device is the exhaust gas purification catalytic device according to any one of Aspects 1 to 5.
<<Aspect 12>> An exhaust gas purification method, comprising disposing the exhaust gas purification catalytic system according to Aspect 11 in an exhaust gas system of a gasoline engine to purify an exhaust gas discharged from the gasoline engine.

### [ADVANTAGEOUS EFFECTS OF INVENTION]

According to the present invention, an exhaust gas purification catalytic device for a gasoline engine in which, when used in an exhaust gas system of a gasoline engine, heat resistance is high, high-level three-way catalytic performance is exhibited, and the amount of NH₃ discharged is lowered; and an exhaust gas purification catalytic system comprising the exhaust gas purification catalytic device are provided.

### DESCRIPTION OF EMBODIMENTS

### <<Exhaust gas purification catalytic device for a gasoline engine>>

The exhaust gas purification catalytic device for a gasoline engine of the present invention is
an exhaust gas purification catalytic device for a gasoline engine, comprising
a substrate,
a NH₃ adsorption layer containing a proton-type zeolite, and
a PGM layer containing a catalytic noble metal selected from Pd, Pt, and Rh, wherein
the proton-type zeolite contained in the NH₃ adsorption layer has an average pore size of 0.60 nm or less,
the NH₃ adsorption layer
   is disposed on the substrate side relative to the PGM layer, and
   is disposed with a length shorter than total length of the substrate from an exhaust gas flow upstream side of the substrate, and
the PGM layer is disposed with a length longer than the NH₃ adsorption layer from the exhaust gas flow upstream side of the substrate.

In the exhaust gas purification catalytic device for a gasoline engine of the present invention, the NH₃ adsorption layer contains a proton-type zeolite having an average pore size of 0.60 nm or less. By having a proton-type zeolite as the zeolite contained in the NH₃ adsorption layer, heat resistance of the NH₃ adsorption layer is improved, and even after endurance running, high-level NH₃ adsorption capacity is exhibited. By setting the average pore size of the proton-type zeolite to 0.60 nm or less, the NH₃ adsorption layer can effectively adsorb NH₃.

In the exhaust gas purification catalytic device for a gasoline engine of the present invention, the NH₃ adsorption layer is disposed on the substrate side relative to the PGM layer. Specifically, the exhaust gas purification catalytic device for a gasoline engine of the present invention is a layered-type catalytic device in which a catalyst layer having a bilayer configuration is disposed on the substrate, wherein the NH₃ adsorption layer is the lower layer, and the PGM layer is the upper layer. Accordingly, NH₃ desorbed from the NH₃ adsorption layer after the exhaust gas purification catalytic device is warmed up is brought into contact with the PGM layer with high probability to be purified.

In the exhaust gas purification catalytic device for a gasoline engine of the present invention,
the NH₃ adsorption layer is disposed with a length shorter than the total length of the substrate from the exhaust gas flow upstream end of the substrate, and
the PGM layer is disposed with a length longer than the NH₃ adsorption layer from the exhaust gas flow upstream end of the substrate. According to these requirements, the NH₃ adsorption layer is covered over the total length thereof by the PGM layer. Particularly, the downstream end of the NH₃ adsorption layer is covered by the PGM layer. Therefore, NH₃ desorbed from the NH₃ adsorption layer after the exhaust gas purification catalytic device is warmed up is brought into contact with the PGM layer with even higher probability to be purified.

Hereinafter, elements constituting the exhaust gas purification catalytic device for a gasoline engine of the present invention will be described in order.

### <Substrate>

The substrate applied to the exhaust gas purification catalytic device of the present invention may be a substrate having a plurality of cell channels divided by a partition wall, or may be a honeycomb substrate used in exhaust gas purification catalytic devices of the prior art. The partition wall of the substrate may have pores for adjacent exhaust gas channels to fluidly communicate therebetween, or may have no such pores.

The constituent material of the substrate, for example, may be a flame-resistant inorganic oxide such as cordierite, or may be a metal. The substrate may be of a straight flow type, or may be of a wall flow type.

The substrate in the manufacturing method for an exhaust gas purification catalytic device of the present invention, for example, may typically be a straight flow-type monolithic honeycomb substrate made of cordierite, a wall flow-type monolithic honeycomb substrate made of cordierite, or a metal honeycomb substrate.

The shape of the substrate may be a cylinder, an elliptical cylinder, or a polygonal column.

The volume of the substrate, as apparent volume expressed as base area × length, for example, may be 500 mL or more, 800 mL or more, 1.0 L or more, or 1.2 L or more, and for example, may be 5.0 L or less, 3.0 L or less, 2.0 L or less, 1.5 L or less, or 1.2 L or less.

### <NH₃ adsorption layer>

The NH₃ adsorption layer contains a proton-type zeolite.

In ordinary zeolites, since the charge-compensating cations are metal ions, the charge-compensating cations are eluted after endurance running, and NH₃ adsorption capacity is often impaired. However, in proton-type zeolites, since the charge-compensating cations of the zeolite are protons, heat resistance is high, and a decrease in NH₃ adsorption capacity due to elution of charge-compensating cations is inhibited.

The average pore size of the proton-type zeolite contained in the NH₃ adsorption layer is 0.60 nm or less. The adsorption performance of the zeolite depends on the relationship between pore size of the zeolite and molecular size of the adsorbent. NH₃ has a molecular size of about 0.26 nm, and thus can be adsorbed by a zeolite having an average pore size of 0.60 nm or less with high efficiency.

The average pore size of the proton-type zeolite may be 0.55 nm or less, 0.50 nm or less, 0.45 nm or less, 0.40 nm or less, 0.35 nm or less, or 0.30 nm or less, and for example, may be 0.25 nm or more, 0.26 nm or more, more than 0.26 nm, 0.27 nm or more, 0.30 nm or more, 0.35 nm or more, or 0.40 nm or more.

The pore size of a proton-type zeolite is uniquely determined according to crystal structure from the database of the International Zeolite Association Structure Commission. When a proton-type zeolite is a mixture having a plurality of crystal structures, the average pore size of the proton-type zeolite is defined as an average value of pore sizes of crystal structures indicated in the database.

The proton-type zeolite contained in the NH₃ adsorption layer in the exhaust gas purification catalytic device of the present invention may include a small-ring proton-type zeolite. In the present specification, a "small-ring proton-type zeolite" means a proton-type zeolite in which the basic framework is composed only of a ring selected from 4-, 6-, and 8-membered rings.

The small-ring proton-type zeolite, for example, may be H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG, and H-ZON. One or more selected therefrom may be used.

The proton-type zeolite in the NH₃ adsorption layer of the present invention, from the viewpoint of more effectively adsorbing NH₃, may comprise 80% by mass or more, 85% by mass or more, 90% by mass or more, 95% by mass or more, 98% by mass or more, or 99% by mass or more of the small-ring proton-type zeolite relative to the total mass of the proton-type zeolite, or 100% by mass of the proton-type zeolite may be the small-ring proton-type zeolite.

The SiO₂/Al₂O₃ ratio (SAR) of the proton-type zeolite is not particularly limited, and for example, may be 5 or greater, 10 or greater, 20 or greater, 30 or greater, 40 or greater, or 50 or greater, and for example, may be 500 or less, 300 or less, 200 or less, 100 or less, or 50 or less.

The NH₃ adsorption layer may comprise optional components in addition to the proton-type zeolite. An optional component contained in the NH₃ adsorption layer, for example, may be a compound or binder comprising a zeolite other than a proton-type zeolite, an inorganic oxide other than zeolite, an alkali metal element, or an alkaline earth metal element.

The inorganic oxide other than zeolite, as an optional component contained in the NH₃ adsorption layer, for example, may be an oxide of one or more elements selected from Al, Si, Ti, Zr, Ce, and rare earth elements other than Ce. The binder, for example, may be selected from alumina sol, zirconia sol, and titania sol.

The NH₃ adsorption layer may or may not comprise an iron group element or a copper group element (particularly iron or copper). When an iron group element or a copper group element is contained in the NH₃ adsorption layer, there are cases where the proton-type zeolite undergoes ion exchange with these elements. When exchanged ions are desorbed from the ion-exchanged zeolite, there are cases where a collapse of the zeolite framework occurs and the NH₃ adsorption capacity is impaired. From this viewpoint, the NH₃ adsorption layer may comprise no iron group element or copper group element.

The NH₃ adsorption layer may or may not comprise a catalytic noble metal (for example, a platinum group element). There are cases where the catalytic noble metal in the NH₃ adsorption layer agglomerates during use and catalytic performance is impaired, and thus the NH₃ adsorption layer may comprise no catalytic noble metal.

The ratio of the proton-type zeolite in the NH₃ adsorption layer, from the viewpoint of more effectively adsorbing NH₃, for example, may be 50% by mass or more, 60% by mass or more, 70% by mass or more, 80% by mass or more, 90% by mass or more, or 95% by mass or more, and may be less than 100% by mass, 98% by mass or less, 95% by mass or less, 90% by mass or less, or 80% by mass or less, as a mass ratio of proton-type zeolite relative to the total mass of the NH₃ adsorption layer.

In the exhaust gas purification catalytic device of the present invention, the NH₃ adsorption layer is disposed on the substrate side relative to the PGM layer described below. The NH₃ adsorption layer, for example, may be disposed so as to come into contact with a partition wall of the substrate to form a lower layer of a catalyst layer.

In the exhaust gas purification catalytic device of the present invention, the NH₃ adsorption layer is disposed with a length shorter than the total length of the substrate from the exhaust gas flow upstream end of the substrate. Specifically, the NH₃ adsorption layer is not disposed near the downstream end of the substrate. Since NH₃ that has flowed into the exhaust gas purification catalytic device can be efficiently adsorbed, and the probability that after the exhaust gas purification catalytic device is warmed up, NH₃ desorbed from the NH₃ adsorption layer is discharged from the exhaust gas purification catalytic device without coming into contact with the upper PGM layer can be decreased, such a configuration is preferable from the viewpoint of lowering NH₃ emission.

From the viewpoint of efficiently adsorbing NH₃, the length of the NH₃ adsorption layer, from the upstream end of the substrate, may be 30% or more, 40% or more, 50% or more, or 60% or more of the substrate total length. From the viewpoint of reliably bringing the desorbed NH₃ in contact with the PGM layer to be purified, the length of the NH₃ adsorption layer, from the upstream end of the substrate, may be 95% or less, 90% or less, 85% or less, 80% or less, 75% or less, or 70% or less of the substrate total length.

The amount of the NH₃ adsorption layer disposed in the exhaust gas purification catalytic device of the present invention, as the mass of NH₃ adsorption layer per volume of the substrate, including the portion where the NH₃ adsorption layer is not disposed, from the viewpoint of ensuring an effective amount of NH₃ adsorbed, may be 20 g/L or more, 50 g/L or more, 80 g/L or more, or 100 g/L or more, and from the viewpoint of not excessively increasing pressure loss, may be 300 g/L or less, 250 g/L or less, 200 g/L or less, or 150 g/L or less.

### <PGM layer>

The PGM layer contains a catalytic noble metal selected from Pd, Pt, and Rh. The PGM layer, for example, may contain one or more selected from Pd and Pt; and Rh.

The catalytic noble metal may be in the form of a fine particle supported on an inorganic oxide. The average particle size of the catalytic noble metal particles, for example, may be 1 nm or more, 2 nm or more, or 3 nm or more, and may be 15 nm or less, 10 nm or less, 7 nm or less, or 5 nm or less.

The content of the catalytic noble metal in the PGM layer, as the total mass of Pd, Pt, and Rh per volume of the substrate, for example, may be 0.05 g/L or more, 0.10 g/L or more, 0.20 g/L or more, 0.30 g/L or more, 0.40 g/L or more, or 0.50 g/L or more, and for example, may be 2.00 g/L or less, 1.50 g/L or less, 1.20 g/L or less, 1.00 g/L or less, 0.80 g/L or less, or 0.60 g/L or less.

The inorganic oxide contained in the PGM layer may be appropriately selected from among those exemplified above as inorganic oxides to be contained in the NH₃ adsorption layer. The inorganic oxide contained in the PGM layer, particularly, may comprise alumina and an OSC material, and may further comprise an inorganic oxide in addition thereto.

The OSC material is an inorganic oxide having oxygen storage and release capacities, and can be exemplified by, for example, ceria. The ceria may be pure ceria, or in a form contained in composite oxide of Ce and another inorganic element (for example, a ceria-zirconia composite oxide).

When the PGM layer comprises a certain amount of ceria, three-way catalytic performance is improved. The content of ceria in the PGM layer, as the mass ratio of ceria relative to the total mass of the PGM layer, may be 5% by mass or more, 10% by mass or more, 12% by mass or more, or 15% by mass or more, and may be 60% by mass or less, 50% by mass or less, 40% by mass or less, 30% by mass or less, or 20% by mass or less. When ceria is in the form of a composite oxide of Ce and another inorganic oxide, the mass ratio of ceria described above is the value obtained by converting the mass ratio of the composite oxide into an equivalent amount of ceria.

The catalytic noble metal may be supported on one or more inorganic oxides contained in the PGM layer.

The PGM layer is disposed with a length longer than the NH₃ adsorption layer from the exhaust gas flow upstream end of the substrate. According to this configuration, the NH₃ adsorption layer is covered over the total length thereof by the PGM layer. Particularly, the downstream end of the NH₃ adsorption layer is covered by the PGM layer. Therefore, the disposition is preferable from the point that NH₃ desorbed from the NH₃ adsorption layer is reliably brought into contact with the PGM layer to be purified.

The disposition range of the PGM layer is a range from the exhaust gas flow upstream end of the substrate to more than 100% of the length of the NH₃ adsorption layer and extends up to the substrate total length. The length of the PGM layer, under the condition of having a length that is the same as or less than the substrate total length, may be 105% or more, 110% or more, or 120% or more of the length of the NH₃ adsorption layer. The PGM layer may be disposed with the same length as the substrate total length from the exhaust gas flow upstream end of the substrate.

In the exhaust gas purification catalytic device of the present invention, the PGM layer is disposed on the opposite side to the substrate with respect to the NH₃ adsorption layer. The PGM layer may be disposed on the NH₃ adsorption layer, in a region where the NH₃ adsorption layer is disposed on the substrate, or may be disposed so as to come into contact with a partition wall of the substrate, in a region where the NH₃ adsorption layer is not disposed on the substrate.

The amount of the PGM layer disposed in the exhaust gas purification catalytic device of the present invention, as the mass of PGM layer per volume of the substrate, from the viewpoint of ensuring effective three-way catalytic performance, may be 80 g/L or more, 100 g/L or more, 120 g/L or more, 160 g/L or more, or 180 g/L or more, and from the viewpoint of not excessively increasing pressure loss, may be 400 g/L or less, 350 g/L or less, 300 g/L or less, or 250 g/L or less.

The PGM layer may be disposed as a single layer, or may have a first PGM layer containing a catalytic noble metal selected from Pd and Pt and a second PGM layer containing Rh.

The first PGM layer comprises one or two catalytic noble metals selected from Pd and Pt.

The content of the catalytic noble metal in the first PGM layer, as the total mass of Pd and Pt per volume of the substrate, including the portion where the first PGM layer is not disposed, may be 0.05 g/L or more, 0.10 g/L or more, 0.20 g/L or more, 0.30 g/L or more, or 0.40 g/L or more, and for example, may be 1.50 g/L or less, 1.20 g/L or less, 1.00 g/L or less, 0.80 g/L or less, 0.60 g/L or less, or 0.50 g/L or less.

The catalytic noble metal in the first PGM layer may be in the form of a fine particle supported on an inorganic oxide. The inorganic oxide may be appropriately selected from among those exemplified above as inorganic oxides in the NH₃ adsorption layer.

The first PGM layer may or may not comprise a zeolite. However, if the first PGM layer comprises a zeolite, there is a concern that the purpose of the present invention, which aims to efficiently adsorb NH₃ and efficiently purify desorbed NH₃ by disposing the NH₃ adsorption layer and the PGM layer as separate layers, is impaired. From this viewpoint, the first PGM layer may comprise no zeolite.

The first PGM layer may comprise a certain amount of ceria. The content of ceria in the first PGM layer may be the same as that described above as the content of ceria in the PGM layer.

The catalytic noble metal in the first PGM layer may be supported on one or more inorganic oxides contained in the first PGM layer.

The first PGM layer may comprise optional components in addition to one or two catalytic noble metals selected from Pd and Pt and an inorganic oxide. The optional component contained in the first PGM layer, for example, may be an alkali metal element, an alkaline earth metal element, or a binder. The binder, for example, may be selected from alumina sol, zirconia sol, and titania sol.

The first PGM layer may or may not comprise an iron group element or a copper group element (particularly iron or copper). Unlike the case of the NH₃ adsorption layer described above, there is no particular issue even if an iron group element or a copper group element is contained in the first PGM layer.

The amount of the first PGM layer disposed, as the mass of the first PGM layer per volume of the substrate, including the portion where the first PGM layer is not disposed, from the viewpoint of ensuring effective oxidative purification performance, may be 40 g/L or more, 50 g/L or more, 60 g/L or more, 80 g/L or more, or 90 g/L or more, and from the viewpoint of not excessively increasing pressure loss, may be 200 g/L or less, 170 g/L or less, 150 g/L or less, or 120 g/L or less.

The second PGM layer comprises a catalytic noble metal, which is Rh.

The content of the catalytic noble metal (Rh) in the second PGM layer, as the mass of Rh per volume of the substrate, including the portion where the second PGM layer is not disposed, may be 0.01 g/L or more, 0.02 g/L or more, 0.04 g/L or more, 0.06 g/L or more, or 0.08 g/L or more, and for example, 0.30 g/L or less, 0.25 g/L or less, 0.20 g/L or less, 0.15 g/L or less, or 0.10 g/L or less.

The catalytic noble metal in the second PGM layer may be in the form of a fine particle supported on an inorganic oxide. The inorganic oxide may be appropriately selected from among those exemplified above as inorganic oxides in the NH₃ adsorption layer.

The second PGM layer may comprise a certain amount of ceria. The content of ceria in the second PGM layer may be the same as that described above as the content of ceria in the PGM layer.

The catalytic noble metal in the second PGM layer may be supported on one or more inorganic oxides contained in the second PGM layer.

The second PGM layer may comprise optional components in addition to a catalytic noble metal, which is Rh, and an inorganic oxide. The optional component contained in the second PGM layer, for example, may be an alkali metal element, an alkaline earth metal element, or a binder. The binder, for example, may be selected from alumina sol, zirconia sol, and titania sol.

The second PGM layer may or may not comprise an iron group element or a copper group element (particularly iron or copper). Unlike the case of the NH₃ adsorption layer described above, there is no particular issue even if an iron group element or a copper group element is contained in the second PGM layer.

The second PGM layer may comprise no alkali metal element and no alkaline earth metal element.

The amount of the second PGM layer disposed, as the mass of the second PGM layer per volume of the substrate, including the portion where the second PGM layer is not disposed, from the viewpoint of ensuring effective purification performance, may be 40 g/L or more, 50 g/L or more, 60 g/L or more, 80 g/L or more, or 90 g/L or more, and from the viewpoint of not excessively increasing pressure loss, may be 200 g/L or less, 170 g/L or less, 150 g/L or less, or 120 g/L or less.

When the PGM layer has a first PGM layer and a second PGM layer, the total of the lengths of the first PGM layer and the second PGM layer is the same as the total length of the substrate, but may be longer.

The first PGM layer may be disposed so as to extend from the exhaust gas flow upstream end of the substrate toward the downstream side of the exhaust gas flow. The length of the first PGM layer may be 10% or more, 20% or more, 30% or more, 40% or more, or 50% or more, and for example, may be 80% or less, 70% or less, 60% or less, or 50% or less of the substrate total length.

The first PGM layer may form an uppermost layer in direct contact with an exhaust gas near the exhaust gas flow upstream end of the substrate. This configuration is preferable because HC and CO can be effectively purified even before the exhaust gas purification catalytic device is warmed up.

The length over which the first PGM layer forms the uppermost layer in direct contact with an exhaust gas near the exhaust gas flow upstream end of the substrate, for example, may be 10% or more, 20% or more, 30% or more, 40% or more, or 50% or more, and for example, may be 80% or less, 70% or less, 60% or less, or 50% or less of the substrate total length.

The second PGM layer may be disposed so as to extend from the exhaust gas flow downstream end of the substrate toward the upstream side of the exhaust gas flow. The length of the second PGM layer may be 20% or more, 30% or more, 40% or more, 50% or more, or 60% or more, and for example, may be 90% or less, 80% or less, 70% or less, or 60% or less of the substrate total length.

The second PGM layer may form an uppermost layer in direct contact with an exhaust gas near the exhaust gas flow downstream end of the substrate. This configuration is preferable because NOx before the exhaust gas purification catalytic device is warmed up and NH₃ desorbed from the NH₃ adsorption layer and NOx after the exhaust gas purification catalytic device is warmed up can each be effectively purified.

The length over which the second PGM layer forms the uppermost layer in direct contact with an exhaust gas near the exhaust gas flow downstream end of the substrate, for example, may be 20% or more, 30% or more, 40% or more, 50% or more, or 60% or more, and for example, may be 90% or less, 80% or less, 70% or less, or 60% or less of the substrate total length.

When the total of the lengths of the first PGM layer and the second PGM layer is longer than the total length of the substrate, the first PGM layer and the second PGM layer overlap in a region near the center of the substrate, and are thus disposed in a layered manner. In this case, in the overlapping portion of the two layers, the second PGM layer may form the uppermost layer in direct contact with an exhaust gas.

In a certain embodiment, the PGM layer in the exhaust gas purification catalytic device of the present invention is such that
the first PGM layer is disposed with a length of 20% or more and 80% or less of the substrate total length from the exhaust gas upstream end of the substrate,
the second PGM layer is disposed with a length of 30% or more and 90% or less of the substrate total length from the exhaust gas downstream end of the substrate,
the total of the length of the first PGM layer and the length of the second PGM layer exceeds the total length of the substrate, and
in the region where the first PGM layer and the second PGM layer overlap, the second PGM layer forms the uppermost layer in direct contact with an exhaust gas.

### <<Manufacturing method for exhaust gas purification catalytic device>>

The exhaust gas purification catalytic device of the present invention may be manufactured by any method as long as the above configuration is included.

As a non-limiting example, one example of the manufacturing method for an exhaust gas purification catalytic device in which the PGM layer has a first PGM layer and a second PGM layer will be described below.

The exhaust gas purification catalytic device in which the PGM layer has a first PGM layer and a second PGM layer, for example, may be manufactured by a method of disposing a NH₃ adsorption layer, a first PGM layer, and a second PGM layer, in this order, on a partition wall dividing the cell channels in the substrate.

The NH₃ adsorption layer, for example, may be disposed by applying a coating liquid for NH₃ adsorption layer formation onto a partition wall of the substrate, over a predetermined length from the exhaust gas flow upstream end, followed by drying and baking.

The substrate may be appropriately selected depending on the substrate of the desired exhaust gas purification catalytic device. For example, a straight flow-type monolithic honeycomb substrate made of cordierite may be used.

The coating liquid for NH₃ adsorption layer formation, for example, may be a liquid substance in which predetermined amounts of a predetermined proton-type zeolite and other optional components are dissolved or dispersed in a suitable solvent (typically water). It is preferable that a suitable thickening agent be blended into the coating liquid for NH₃ adsorption layer formation to adjust the viscosity of the coating liquid in order to facilitate control of coating length of the coating liquid. Examples of the thickening agent include polyvinyl alcohol (PVA)-based resins; cellulose-based resins such as methyl cellulose, ethyl cellulose, hydroxyethyl cellulose (HEC), and carboxymethyl cellulose; rosin-based resins, and acrylic resins. One or more selected therefrom may be used.

Drying and baking after coating liquid application may be carried out according to a known method or such a method with appropriate modifications made by a person skilled in the art.

A first PGM layer is subsequently disposed.

The first PGM layer, for example, may be disposed by applying a coating liquid for first PGM layer formation onto a partition wall of the substrate on which the NH₃ adsorption layer is disposed, over a predetermined length from the exhaust gas flow upstream side, followed by drying and baking.

The coating liquid for first PGM layer formation, for example, may be a liquid substance in which predetermined amounts of a predetermined inorganic oxide, a precursor of a catalytic noble metal selected from Pd and Pt, and other optional components are dissolved or dispersed in a suitable solvent (typically water).

The catalytic noble metal precursor may be a nitrate, sulfate, hydrochloride, or acetate of the desired catalytic noble metal.

In the case of the coating liquid for first PGM layer formation, a thickening agent similar to the thickening agent in the coating liquid for NH₃ adsorption layer formation is blended to adjust the viscosity of the coating liquid, thereby facilitating control of coating length of the coating liquid.

Drying and baking after coating liquid application may be carried out according to a known method or such a method with appropriate modifications made by a person skilled in the art.

A second PGM layer is further disposed.

The second PGM layer, for example, may be disposed by applying a coating liquid for second PGM layer formation onto a partition wall of the substrate on which the NH₃ adsorption layer and the first PGM layer are disposed, over a predetermined length from the exhaust gas flow downstream side, followed by drying and baking.

The coating liquid for second PGM layer formation may be the same as the coating liquid for first PGM layer formation, except that a nitrate, sulfate, hydrochloride, or acetate of Rh is used as the catalytic noble metal precursor.

Drying and baking after coating liquid application may be carried out according to a known method or such a method with appropriate modifications made by a person skilled in the art.

The exhaust gas purification catalytic device in which the PGM layer has a first PGM layer and a second PGM layer may be manufactured according to the above method or according to this method with appropriate modifications made by a person skilled in the art.

### <<Exhaust gas purification catalytic system>>

According to another viewpoint of the present invention, an exhaust gas purification catalytic system is provided.

The exhaust gas purification catalytic system of the present invention is
an exhaust gas purification catalytic system for a gasoline engine, comprising
an upstream side purification catalytic device disposed on an exhaust gas flow upstream side of an exhaust gas system of a gasoline engine, and
a downstream side purification catalytic device disposed on an exhaust gas flow downstream side of the exhaust gas system, wherein
the upstream side purification catalytic device is a three-way exhaust gas purification catalytic device comprising a platinum group catalytic noble metal, and
the downstream side purification catalytic device is the exhaust gas purification catalytic device of the present invention described above.

Any known three-way exhaust gas purification catalytic device may be used as the upstream side purification catalytic device. Particularly, a three-way exhaust gas purification catalytic device comprising one or more selected from Pd and Pt; and Rh is preferable.

### <<Exhaust gas purification method>>

According to yet another viewpoint of the present invention, an exhaust gas purification method is provided.

The exhaust gas purification method of the present invention is
an exhaust gas purification method, comprising disposing the exhaust gas purification catalytic device of the present invention or the exhaust gas purification catalytic system of the present invention in an exhaust system of a gasoline engine to purify an exhaust gas discharged from the gasoline engine.

### EXAMPLES

According to the following Reference Examples and Comparative Reference Examples, preferable zeolite types for achieving the object of the present invention were examined.

### <<Reference Example 1>>

### 1. Preparation of coating liquids

In the preparation of coating liquids, the following was used for each of alumina, OSC material, and binder.
Alumina: alumina comprising 96.0% of Al₂O₃
OSC material in coating liquid for first PGM layer (Pd layer) formation: composite oxide comprising 40.0% by mass of CeO₂, 50.0% by mass of ZrO₂, 5.0% by mass of Pr₂O₃, and 5.0% by mass of La₂O₃
OSC material in coating liquid for second PGM layer (Rh layer) formation: composite oxide comprising 21.0% by mass of CeO₂, 72.0% by mass of ZrO₂, 5.3% by mass of Nd₂O₃, and 1.7% by mass of La₂O₃
Binder: alumina binder

### (1) Coating liquid for NH₃ adsorption layer formation

A coating liquid for NH₃ adsorption layer formation was prepared by adding 40.0 g/L of H-*BEA, 2.6 g/L of an alumina binder, and a cellulose-based resin as a thickening agent into ion-exchanged water, followed by stirring. The "*" in the "H-*BEA" above indicates a mixed crystal of polymorphs having similar structures (the same hereinafter).

### (2) Preparation of coating liquid for first PGM layer formation

A coating liquid for first PGM layer formation was prepared by adding palladium nitrate equivalent to 0.294 g/L in terms of Pd metal, 25.8 g/L of alumina, 25.8 g/L of an OSC material, 8.4 g/L of BaSO₄, 1.2 g/L of an alumina binder, and a cellulose-based resin as a thickening agent into ion-exchanged water, followed by stirring.

### (3) Preparation of coating liquid for second PGM layer formation

A coating liquid for second PGM layer formation was prepared by adding rhodium nitrate equivalent to 0.0589 g/L in terms of Rh metal, 34.4 g/L of alumina, 51.2 g/L of an OSC material, 1.6 g/L of an alumina binder, and a cellulose-based resin as a thickening agent into ion-exchanged water, followed by stirring.

### 2. Manufacture of exhaust gas purification catalytic device

The entire amount of the coating liquid for NH₃ adsorption layer formation was applied to a honeycomb substrate (diameter of 105.7 mm, total length of 114.3 mm, apparent volume of 1.003 L, cell count of 400 cpsi) made of cordierite over the total length of the substrate, air-dried at 90°C for 2 hours, and then baked at 500°C for 2 hours to form a NH₃ adsorption layer on the substrate.

The entire amount of the coating liquid for first PGM layer formation was applied over a region having 60% of the substrate total length from the exhaust gas flow upstream end of the substrate after NH₃ adsorption layer formation, air-dried at 90°C for 2 hours, and then baked at 500°C for 2 hours to form a first PGM layer (Pd layer) on the exhaust gas flow upstream side on a zeolite layer.

The entire amount of the coating liquid for second PGM layer formation was applied over a region having 80% of the substrate total length from the exhaust gas flow downstream end of the substrate after zeolite layer and Pd layer formation, air-dried at 90°C for 2 hours, and then baked at 500°C for 2 hours to form a second PGM layer (Rh layer) on the exhaust gas flow downstream side on the zeolite layer, thereby manufacturing the exhaust gas purification catalytic device of Reference Example 1.

### 3. Evaluation of exhaust gas purification catalytic device

The exhaust gas purification catalytic device of Reference Example 1 obtained as described above, combined with a three-way catalytic device (apparent volume of substrate of 1.003 L) comprising Pd an Rh as the catalytic noble metals, was evaluated as an exhaust gas purification catalytic system by the following method.

### (1) Endurance running

A three-way catalytic device was disposed on the upstream side of the exhaust gas system of a V-type 8-cylinder gasoline engine having a displacement of 4,600 cc, and the exhaust gas purification catalytic device of Reference Example 1 was disposed on the downstream side, to construct an exhaust gas purification catalytic system. The engine was operated at an average engine speed of 3,000 rpm, with the temperature of the inlet gas to the downstream side exhaust gas purification catalytic device at 700°C, and endurance running of the exhaust gas purification catalytic system was tested over 46 hours by alternately flowing exhaust gases under stoichiometric and lean atmospheres through the exhaust gas purification catalytic system, each for a fixed period.

### (2) Measurement of NH₃ emission

A three-way catalytic device was disposed directly below the engine of an actual vehicle equipped with a gasoline engine having a displacement of 1,500, and the exhaust gas purification catalytic device of Reference Example 1 after the above endurance running was disposed as an underfloor catalyst, to construct an exhaust gas purification catalytic system. The outlet side of the exhaust gas purification catalytic system of Reference Example 1 was connected to an FT-IR device. The actual vehicle in this state was driven on a chassis dynamometer in driving mode simulating an RDE (Real Driving Emission) test. The NH₃ concentration in the exhaust gas discharged from the exhaust gas purification catalytic device of Reference Example 1 was measured by FT-IR, and NH₃ emission was determined. Results are shown in Table 1.

### <<Reference Example 2>>

Except that in "(1) Preparation of coating liquid for NH₃ adsorption layer formation" of "1. Preparation of coating liquids", H-CHA was used in place of H-*BEA and an H-CHA layer was formed as the NH₃ adsorption layer, an exhaust gas purification catalytic device was manufactured and evaluated in the same manner as in Reference Example 1. Results are shown in Table 1.

### <<Reference Example 3>>

Except that in "(2) Preparation of coating liquid for first PGM layer formation" of "1. Preparation of coating liquids", platinum(II) nitrate equivalent to 0.294 g/L in terms of Pt metal was used in place of palladium nitrate and a Pt layer was used as the first PGM layer, an exhaust gas purification catalytic device was manufactured and evaluated in the same manner as in Reference Example 2. Results are shown in Table 1.

### <<Comparative Reference Example 1>>

Except that in "(1) Preparation of coating liquid for NH₃ adsorption layer formation" of "1. Preparation of coating liquids", Cu-CHA-type zeolite ion-exchanged with copper ions was used in place of H-*BEA and a Cu-CHA layer was formed as the NH₃ adsorption layer, an exhaust gas purification catalytic device was manufactured and evaluated in the same manner as in Reference Example 1. Results are shown in Table 1.

### <<Comparative Reference Example 2>>

Except that in "2. Manufacture of exhaust gas purification catalytic device", the order of formation of the layers was set to the order of first PGM layer (Pd layer) on the upstream side; second PGM layer (Rh layer) on the downstream side; and NH₃ adsorption layer, with the NH₃ adsorption layer as the uppermost layer, an exhaust gas purification catalytic device was manufactured and evaluated in the same manner as in Reference Example 2. Results are shown in Table 1.

### <<Comparative Reference Example 3>>

### 1. Preparation of coating liquid

The coating liquid for NH₃ adsorption layer, the coating liquid for first PGM layer formation, and the coating liquid for second PGM layer formation obtained in the same manner as in "1. Preparation of coating liquids" in Comparative Reference Example 1 were mixed to obtain a coating liquid for integrated catalyst layer formation.

### 2. Manufacture of exhaust gas purification catalytic device

The entire amount of the coating liquid for integrated catalyst layer formation obtained as described above was applied over the substrate total length of a honeycomb substrate (diameter of 117 mm, total length of 100 mm, cell count of 600 cpsi (93 cells/cm²)) made of cordierite, air-dried at 90°C for 2 hours, and then baked at 500°C for 2 hours to form a catalyst layer (Cu-CHA+Pd+Rh layer) of a single layer comprising Cu-CHA, Pd, and Rd on the substrate, thereby manufacturing the exhaust gas purification catalytic device of Comparative Reference Example 3.

### 3. Evaluation of exhaust gas purification catalytic device

The exhaust gas purification catalytic device of Comparative Reference Example 3 obtained as described above was used to evaluate in the same manner as in Reference Example 1. Results are shown in Table 1.

### <<Comparative Reference Example 4>>

Except that in "(1) Preparation of coating liquid for NH₃ adsorption layer formation" of "1. Preparation of coating liquids", FAU-type zeolite ion-exchanged with hydrogen ions (H-FAU) was used in place of H-*BEA and an H-FAU layer was formed as the NH₃ adsorption layer, an exhaust gas purification catalytic device was manufactured and evaluated in the same manner as in Reference Example 1. Results are shown in Table 1.

### [Table 1]

**Table 1.**

| | Catalyst coating layer | | | | NH3 emission (mg/km) |
|---|---|---|---|---|---|
| | Lower layer | | Upper layer | | |
| | Type | Formation length (%) | Type | Formation length (%) | |
| Reference Example 1 | H-*BEA layer | 100 | Upstream side: Pd layer | 60 | 2.48 |
| | | | Downstream side: Rh layer | 80 | |
| Reference Example 2 | H-CHA layer | 100 | Upstream side: Pd layer | 60 | 1.15 |
| | | | Downstream side: Rh layer | 80 | |
| Reference Example 3 | H-CHA layer | 100 | Upstream side: Pt layer | 60 | 1.39 |
| | | | Downstream side: Rh layer | 80 | |
| Comparative Reference Example 1 | Cu-CHA layer | 100 | Upstream side: Pd layer | 60 | 2.95 |
| | | | Downstream side: Rh layer | 80 | |
| Comparative Reference Example 2 | Upstream side: Pd layer | 60 | H-CHA layer | 100 | 3.56 |
| | Downstream side: Rh layer | 80 | | | |
| Comparative Reference Example 3 | Single layer: Cu-CHA+Pd+Rh layer | 100 | - | - | 3.87 |
| Comparative Reference Example 4 | H-FAU layer | 100 | Upstream side: Pd layer | 60 | 14.85 |
| | | | Downstream side: Rh layer | 80 | |

Referring to Table 1, the following was found.

The exhaust gas purification catalytic devices of Comparative Reference Example 1, in which Cu-CHA was used as the zeolite, and Comparative Reference Example 4, in which H-FAU (pore size of 7.35 Å) was used, had high NH₃ emissions. Even when H-CHA (pore size of 3.72 Å) was used as the zeolite, the exhaust gas purification catalytic devices of Comparative Reference Example 2, in which the NH₃ adsorption layer was disposed as the upper layer, and Comparative Reference Example 3, in which the zeolite and PGM were contained in a single layer, also had high NH₃ emissions.

The exhaust gas purification catalytic device of Comparative Reference Example 4, in which H-FAU having a large pore size was used, having remarkably high NH₃ emission is particularly noteworthy.

In the exhaust gas purification catalytic devices of Reference Examples 1 to 3, in which H-*BEA (pore size of 5.95 Å) or H-CHA (pore size of 3.72 Å) as the zeolite was used and the NH₃ adsorption layer was disposed as the lower layer, NH₃ emissions were low. Particularly, the exhaust gas purification catalytic devices of Reference Examples 2 and 3, in which small-ring proton-type zeolites (H-CHA) composed only of 4-, 6-, and 8-membered rings were used, had remarkably low NH₃ emissions.

From the above, it was verified that as the zeolite for achieving the object of the present invention, proton zeolites having a small pore size are preferable, and small-ring proton-type zeolites composed only of 4-, 6-, and 8-membered rings are particularly preferable.

### <<Comparative Example 1>>

### 1. Preparation of coating liquids

In the preparation of coating liquids, the following was used for each of alumina, OSC material, and binder.
Alumina: alumina comprising 96.0% of Al₂O₃
OSC material in coating liquid for Pd layer formation: composite oxide comprising 40.0% by mass of CeO₂, 50.0% by mass of ZrO₂, 5.0% by mass of Pr₂O₃, and 5.0% by mass of La₂O₃
OSC material in coating liquid for Rh layer formation: composite oxide comprising 21.0% by mass of CeO₂, 72.0% by mass of ZrO₂, 5.3% by mass of Nd₂O₃, and 1.7% by mass of La₂O₃
Binder: alumina binder

### (1) Coating liquid for NH₃ adsorption layer formation

A coating liquid for NH₃ adsorption layer formation was prepared by adding 106.0 g/L of H-CHA, 7.0 g/L of an alumina binder, a cellulose-based resin as a thickening agent into ion-exchanged water, followed by stirring.

### (2) Preparation of coating liquid for first PGM layer formation

A coating liquid for first PGM layer formation was prepared by adding palladium nitrate equivalent to 0.44 g/L in terms of Pd metal, 43.0 g/L of alumina, 43.0 g/L of an OSC material, 14.0 g/L of BaSO₄, 2.0 g/L of an alumina binder, and a cellulose-based resin as a thickening agent into ion-exchanged water, followed by stirring.

### (3) Preparation of coating liquid for second PGM layer formation

A coating liquid for second PGM layer formation was prepared by adding rhodium nitrate equivalent to 0.08 g/L in terms of Rh metal, 43.0 g/L of alumina, 64.0 g/L of an OSC material, 2.0 g/L of an alumina binder, and a cellulose-based resin as a thickening agent, followed by stirring.

### 2. Manufacture of exhaust gas purification catalytic device

The entire amount of the coating liquid for NH₃ adsorption layer formation was applied over the total length of a honeycomb substrate (diameter of 105.7 mm, total length of 114.3 mm, apparent volume of 1.003 L, and cell count of 400 cpsi) made of cordierite from the exhaust gas flow upstream end of the substrate, air-dried at 90°C for 2 hours, and then baked at 500°C for 2 hours to form a NH₃ adsorption layer on the substrate.

The entire amount of the coating liquid for first PGM layer formation was applied over a region having 60% of the substrate total length from the exhaust gas flow upstream end of the substrate after zeolite layer formation, air-dried at 90°C for 2 hours, and then baked at 500°C for 2 hours to form a first PGM layer (Pd layer) on the exhaust gas flow upstream side.

The entire amount of the coating liquid for second PGM formation was applied over a region having 80% of the substrate total length from the exhaust gas flow downstream end after zeolite layer and Pd layer formation, air-dried at 90°C for 2 hours, and then baked at 500°C for 2 hours to form a second PGM layer (Rh layer) on the exhaust gas flow downstream side, thereby manufacturing the exhaust gas purification catalytic device of Comparative Example 1.

### 3. Evaluation of exhaust gas purification catalytic device

The exhaust gas purification catalytic device of Comparative Example 1 obtained as described above, combined with a three-way catalytic device (apparent volume of substrate of 1.003 L) comprising Pd and Rh as catalytic noble metals, was evaluated as an exhaust gas purification catalytic system by the following method.

Using the exhaust gas purification catalytic device of Comparative Example 1, emission was evaluated in the same manner as in the above Reference Example 1, except that endurance running temperature was changed to 850°C. In the evaluation of emission, NH₃ concentration in an exhaust gas was measured by FT-IR, and NH₃ emission was determined. A commercially available automotive exhaust gas measuring instrument was connected to the outlet side of the exhaust gas purification catalytic device of Comparative Example 1 to measure CO emission and THC (total hydrocarbon) emission. Results are shown in Table 2.

### <<Examples 1 to 4>>

Except that the formation length of the NH₃ adsorption layer was set to a length relative to the substrate total length from the exhaust gas flow upstream side in the ratio (percentage) indicated in Table 2, each of the exhaust gas purification catalytic devices was manufactured in the same manner as in Comparative Example 1. The zeolite amounts contained in the exhaust gas purification catalytic devices in Comparative Example 1 and Examples 1 to 4 were all set to the same amount.

The obtained exhaust gas purification catalytic device was evaluated in the same manner as in Comparative Example 1. Results are shown in Table 2.

### [Table 2]

**Table 2.**

| | Catalyst coating layer | | | | Emission (mg/km) | | | |
|---|---|---|---|---|---|---|---|---|
| | Lower layer | | Upper layer | | | | | |
| | Type | Formation length (%) | Type | Formation length (%) | NH3 | CO | THC | NOx |
| Comparative Example 1 | H-CHA layer | 100 | Upstream side: Pd layer | 60 | 11.5 | 231 | 18 | 24 |
| | | | Downstream side: Rh layer | 80 | | | | |
| Example 1 | H-CHA layer | 75 | Upstream side: Pd layer | 60 | 9.4 | 249 | 17 | 26 |
| | | | Downstream side: Rh layer | 80 | | | | |
| Example 2 | H-CHA layer | 60 | Upstream side: Pd layer | 60 | 8.1 | 227 | 18 | 24 |
| | | | Downstream side: Rh layer | 80 | | | | |
| Example 3 | H-CHA layer | 50 | Upstream side: Pt layer | 60 | 8.3 | 198 | 19 | 24 |
| | | | Downstream side: Rh layer | 80 | | | | |
| Example 4 | H-CHA layer | 40 | Upstream side: Pd layer | 60 | 10.0 | 259 | 20 | 20 |
| | | | Downstream side: Rh layer | 80 | | | | |

Referring to Table 2, the following was found.

The NH₃ adsorption layer was formed over a length relative to the substrate total length from the exhaust gas flow upstream end of the substrate in a ratio indicated in the "Formation length" column of Table 2. Compared to when the formation length of the NH₃ adsorption layer was 100% of the substrate total length, a shorter formation length resulted in a low NH₃ emission (comparison between Comparative Example 1 and Examples 1 to 4). However, in Example 4, in which the formation length of the NH₃ adsorption layer was 40% of the substrate total length, NH₃ emission was high compared to Examples 1 to 3, in which the formation length of the NH₃ adsorption layer was 50 to 75% of the substrate total length. This phenomenon is presumed to be due to the following reason.

When the formation length of the NH₃ adsorption layer is long, it is considered that there is an increase in the probability that NH₃ adsorbed on the downstream side of an exhaust gas flow of the NH₃ adsorption layer during warm-up is released from the exhaust gas purification catalytic device upon desorption after warm-up without coming into contact with the upper PGM layer, and thus NH₃ emission is increased. When the formation length of the NH₃ adsorption layer is excessively short, it is considered that the amount of adsorbable NH₃ is small, and thus NH₃ emission is increased during warm-up.

It was verified from Table 2 that when the formation length of the NH₃ adsorption layer was in the range of 40% or more and 75% or less from the exhaust gas flow upstream end of the substrate, NH₃ emission was sufficiently decreased.

The emissions of CO, THC, and NOx were almost the same, regardless of the formation length of the NH₃ adsorption layer.

The NH₃ emissions of the exhaust gas purification catalytic devices of Examples 1 to 4 were apparently higher than the NH₃ emissions of the exhaust gas purification catalytic devices of Reference Examples 1 to 3. This is due to differences in endurance running temperatures of the exhaust gas purification catalytic devices, leading to varying degrees of catalyst degradation. Therefore, the NH₃ emissions of Reference Examples 1 to 3 and the NH₃ emissions of Examples 1 to 4 cannot be directly compared.

## Claims

1. An exhaust gas purification catalytic device for a gasoline engine, comprising
a substrate,
a NH₃ adsorption layer containing a proton-type zeolite, and
a PGM layer containing a catalytic noble metal selected from Pd, Pt, and Rh, wherein
the proton-type zeolite contained in the NH₃ adsorption layer has an average pore size of 0.60 nm or less,
the NH₃ adsorption layer
is disposed on the substrate side relative to the PGM layer and
is disposed with a length shorter than total length of the substrate from an exhaust gas flow upstream end of the substrate, and
the PGM layer is disposed with a length longer than the NH₃ adsorption layer from the exhaust gas flow upstream end of the substrate.

2. The exhaust gas purification catalytic device according to claim 1, wherein the proton-type zeolite comprises 80% by mass or more of a small-ring proton-type zeolite in which a basic framework consists only of a ring selected from 4-, 6-, and 8-membered rings relative to total mass of the proton-type zeolite.

3. The exhaust gas purification catalytic device according to claim 2, wherein the small-ring proton-type zeolite is one or more selected from H-ACO, H-AEI, H-AEN, H-AFN, H-AFT, AFX, H-ANA, H-APC, H-APD, H-ATT, H-CDO, H-CHA, H-DDR, H-DFT, H-EAB, H-EDI, H-EPI, H-ERI, H-GIS, H-GOO, H-IHW, H-ITE, H-ITW, H-LEV, H-LTA, H-KFI, H-MER, H-MON, H-NSI, H-OWE, H-PAU, H-PHI, H-RHO, H-RTH, H-SAT, H-SAV, H-SIV, H-THO, H-TSC, H-UEI, H-UFI, H-VNI, H-YUG, and H-ZON.

4. The exhaust gas purification catalytic device according to claim 1, wherein the NH₃ adsorption layer is disposed with a length of 40% or more and 90% or less of substrate total length from the upstream end of the substrate.

5. The exhaust gas purification catalytic device according to claim 2, wherein the NH₃ adsorption layer is disposed with a length of 40% or more and 90% or less of substrate total length from the upstream end of the substrate.

6. The exhaust gas purification catalytic device according to any one of claims 1 to 5, wherein
the PGM layer has a first PGM layer containing a catalytic noble metal selected from Pd and Pt; and a second PGM layer containing Rh,
the first PGM layer forms an uppermost layer in which a length of 10% or more of substrate total length from the exhaust gas flow upstream end of the substrate is in direct contact with an exhaust gas, and
the second PGM layer forms an uppermost layer in which a length of 20% or more of substrate total length from an exhaust gas flow downstream end of the substrate is in direct contact with the exhaust gas.

7. The exhaust gas purification catalytic device according to claim 6, wherein the first PGM layer is disposed with a length of 10% or more and 80% or less of substrate total length from the exhaust gas upstream end of the substrate.

8. The exhaust gas purification catalytic device according to claim 6, wherein the second PGM layer is disposed with a length of 20% or more and 90% or less of substrate total length from the exhaust gas downstream end of the substrate.

9. The exhaust gas purification catalytic device according to claim 6, wherein
the first PGM layer is disposed with a length of 20% or more and 80% or less of substrate total length from the exhaust gas upstream end of the substrate,
the second PGM layer is disposed with a length of 30% or more and 90% or less of substrate total length from the exhaust gas downstream end of the substrate,
a total of a length of the first PGM layer and a length of the second PGM layer exceeds total length of the substrate, and
in a region where the first PGM layer and the second PGM layer overlap, the second PGM layer forms an uppermost layer in direct contact with the exhaust gas.

10. An exhaust gas purification method, comprising disposing the exhaust gas purification catalytic device according to any one of claims 1 to 5 in an exhaust gas system of a gasoline engine to purify an exhaust gas discharged from the gasoline engine.

11. An exhaust gas purification catalytic system for a gasoline engine, comprising
an upstream side purification catalytic device disposed on an exhaust gas flow upstream side of an exhaust gas system of a gasoline engine, and
a downstream side purification catalytic device disposed on an exhaust gas flow downstream side of the exhaust gas system, wherein
the upstream side purification catalytic device is a three-way exhaust gas purification catalytic device comprising a platinum group catalytic noble metal, and
the downstream side purification catalytic device is the exhaust gas purification catalytic device according to any one of claims 1 to 5.

12. An exhaust gas purification method, comprising disposing the exhaust gas purification catalytic system according to claim 11 in an exhaust gas system of a gasoline engine to purify an exhaust gas discharged from the gasoline engine.
